# EUROPEAN PATENT SPECIFICATION

(11) **EP 2 418 506 B1**
(45) Date of publication and mention of the grant of the patent: **11.11.2020**
(21) Application number: 10172570.3
(22) Date of filing: 11.08.2010
(51) Int. Cl.: G01S 7/481, G01S 17/04, G01S 17/02, H04M 1/60

(54) **Communication device sensor assembly**
Sensoranordnung für eine Kommunikationsvorrichtung
Ensemble formant capteur de dispositif de communication

(43) Date of publication of application: 15.02.2012
(73) Proprietor: BlackBerry Limited, Waterloo, ON N2K 0A7 (CA)
(72) Inventor: Lee, Hsin Chin, Waterloo, Ontario N2L 3W8 (CA); Broga, Antanas Matthew, Waterloo, Ontario N2L 3W8 (CA)
(74) Representative: Hanna Moore + Curley

(56) References cited:
- EP-A1- 1 408 343
- WO-A1-91/15872
- WO-A2-2009/120568
- DE-A1- 4 406 906
- DE-A1- 10 254 888
- GB-A- 2 346 500
- GB-A- 2 458 832
- Bernard C. Kress ET AL: "Applied Digital Optics: From Micro-optics to Nanophotonics" In: "Specifying and Testing Digital Optics", 27 October 2009 (2009-10-27), Wiley, US, XP055229140, ISBN: 978-0-470-02263-4 pages 61-61,

## Description

### FIELD OF THE TECHNOLOGY

The present disclosure relates generally to sensor assemblies for electronic communication devices, and to electronic communication devices containing such assemblies. More specifically, enabling implementations relate to one or more sensor modules behind a microprism lens or micro_lens, and the use of such modules in combination to manage device power consumption in electronic communication devices. The invention, as such, is defined by the claims.

### BACKGROUND

European patent application publication number 1408343 discloses a window to be used in connection with a proximity detector.

UK patent application publication number 2458832 discloses an electronic device comprising a first part and a second part coupled together via a hinge. A protuberance extends from the hinge, and a proximity sensor is located in close proximity to the hinge such that the distance between the proximity sensor and the protuberance varies as the second part is moved with respect to the first part.

German patent application publication number 4406906 discloses a device for measuring rooms using beams of light. The device includes a beam transmitter and a beam receiver. An optical element is arranged in front of each of the beam transmitter and the beam receiver. The optical element is arranged to diverge the beams inside the compartment being monitored and converges the beams out of the compartment.

UK patent application publication number 2346500 discloses a portable communication device having a sensor. The sensor disables a touch sensitive input device from generating an input signal when the portable communication device is positioned in close proximity to the user.

German patent application publication number 10254888 discloses a reflective light sampler with background light suppression for detection of light diffusely scattered by an object. The sampler has a light transmitter and a number of receiver elements of which one at least primarily detects light from a near region and the other light largely from a far region.

International patent application publication number WO 91/15872 discloses a method and apparatus which allow for the detection of an object by the generation of a radiated beam and a subsequent reflection by the object of a portion thereof.

Bernard C. Kress ET AL: "Applied Digital Optics: From Microoptics to Nanophotonics" in: "Specifying and Testing Digital Optics", 27 October 2009 (2009-1 0-27), Wiley, US, XP055229140, ISBN: 978-0-4 70-02263-4 page 61 discloses different physical implementations of digital optics.

### BRIEF DESCRIPTION OF THE DRAWINGS

FIG. 1 illustrates a communication system including a mobile communication device to which example implementations of the technology can be applied.
FIG. 2 illustrates a block diagram of a top side view of a proximity sensor,
FIG. 3 illustrates a handheld communication device.
FIG. 4 illustrates a block diagram of a handheld communications device.
FIG. 5 illustrates a notional diagram of the field-of-view (FOV) of a proximity sensor installed in a mobile communication device.
FIG. 6 illustrates a section of a microprism array.
FIG. 7 illustrates details of a microprism array
FIG. 8 illustrates details of a microlens array.
FIG. 9 illustrates a section of a microlens array.
FIG. 10 illustrates a diverging light focusing device of the technology integrated into a cover lens over an emitter.
FIG. 11 illustrates a converging light focusing device of the technology integrated into a cover lens over a detector.
FIG. 12 illustrates several diverging light focusing devices of the technology, with a bi-concave lens integrated into a light guide.
FIG. 13 illustrates several converging light focusing devices of the technology, with a bi-convex lens integrated into a light guide.
FIG. 14 illustrates example sources of noise in the configuration of FIG. 5.
FIG. 15 illustrates a facet configuration of microprisms and alignment of microprism arrays.
FIG. 16 illustrates a facet configuration of microprisms and alignment of microprism arrays.
FIG. 17 illustrates a facet configuration of microprisms and alignment of microprism arrays.
FIG. 18 illustrates a facet configuration of microprisms and alignment of microprism arrays.
FIG. 19 illustrates a facet configuration of microprisms and alignment of microprism arrays.
FIG. 20 illustrates implementations of the technology using microprism arrays installed in a mobile electronic device.
FIG. 21 illustrates implementations of the technology using microprism arrays installed in a mobile electronic device.
FIG. 22 illustrates implementations of the technology using microprism arrays installed in a mobile electronic device.
FIG. 23 illustrates implementations of the technology using microprism arrays installed in a mobile electronic device.
FIG. 24 illustrates implementations of the technology using microprism arrays installed in a mobile electronic device.
FIG. 25 illustrates implementations of the technology using microprism arrays installed in a mobile electronic device.

### DETAILED DESCRIPTION

Reference will now be made in detail to implementations of the technology. Each example is provided by way of explanation of the technology only, not as a limitation of the technology. It will be apparent to those skilled in the art that various modifications and variations can be made in the present technology. For instance, features described as part of one implementation of the technology can be used on another implementation to yield a still further implementation. Thus, it is intended that the present technology cover such modifications and variations that come within the scope of the technology.

Implementations of the technology include a proximity sensor assembly comprising: a light source, a first detector, and a first light focusing device. The light source is operative to emit light toward a first target area. The first detector is operative to detect light, including light emitted by the light source and reflected from the first target area. The first light focusing device can be in a first optical path between the light source and the first detector. The first optical path can include an optical path from the light source and reflected from the first target area. The first light focusing device can be one of a microprism array, a microlens array, a divering lens, a converging, and a combination thereof. The first light focusing device can be substantially in the first optical path between the light source and the first target area; substantially in the first optical path between the first target area and the first detector. The assembly can further include a second light focusing device substantially in the first optical path between the light source and the first detector. Certain implementations include the first light focusing device as a diverging lens substantially in the first optical path between the light source the first target area; and the second light focusing device as a converging lens substantially in the first optical path between the first target area and the first detector. Certain implementations include the first light focusing device as a microprism array substantially in the first optical path between the light source the first target area; and the second light focusing device as a microprism array substantially in the first optical path between the first target ureu and the first detector. Further implementations include a second detector operative to detect light, including light from the light source **202** reflected from a target in a second target area. Some of those implementations include a second light focusing device in a second optical path between the light source and the second detector. The second optical path including the path of light from the light source **202** reflected from the second target area.

Implementations of the technology also include electronic devices each comprising a body, a light source, a detector, a cover, and a light focusing device. The body defines an aperture. The light source is positioned interior to the body, and is operative to emit light toward a target area exterior to the body, e.g., through the aperture. The detector is positioned interior to the body, and is operative to detect light, including light from the light source reflected from the target area. The cover is positioned in the aperture, and is substantially in an optical path between the light source and the target area and between the target area and the detector. The light focusing device is substantially in the optical path between the light source and the detector. The optical path includes the path of light from the light source reflected from the target area. In certain implementation of the electronic device, the light focusing device is a diverging lens substantially in the optical path between the light source and the target area. In some of those implementations, the diverging lens is a plano-convex lens formed in the cover, comprising the convex surface on the interior surface of the cover. In some of those implementations the diverging lens is a microprism array formed on the interior surface of the cover. In some implementations of the electronic device the light focusing device is a converging lens substantially in the optical path between the target area and the detector. In some of those implementations the converging lens is a microprism array formed on the interior surface of the cover.

For the purpose of this disclosure, "light" refers to electromagnetic energy in the ultraviolet, visible, and infrared portions of the electromagnetic spectrum; and the energy source also is referred to as a "light source" and an "emitter." While the target is shown having a uniform surface for simplicity of illustration, targets can have non-uniform surfaces. The microprism array can comprise a matrix alignment of pyramidal features on 0.060mm feature spacing with 80 degree facet orientation. For example, to obtain the benefits of the present technology, each of prism pitch and prism width can vary between 0.01mm and 2mm, while prism angle can vary between 30 degrees and 160 degrees. Array alignments can include strip array alignment in which the lines represent peaks and lines represent troughs; circle alignment in which the lines represent peaks and lines represent troughs; matrix alignment in which the microprisms are arrayed in rows, e.g., and columns, e.g., and example four-facet symmetrical microprisms and an eight-facet symmetrical microprism are shown; snake alignment in which lines represent peaks and lines represent troughs; and delta alignment similar to matrix alignment except that columns are offset every other row. As part of the implementation over an emitter, the technology can use a plano-concave simple lens with concave portion as the light guide exterior portion, a bi-concave simple lens, and negative meniscus simple lens. As part of the implementation over a detector, the technology can use a bi-convex simple lens, a plano-convex simple lens, and negative meniscus simple lens.

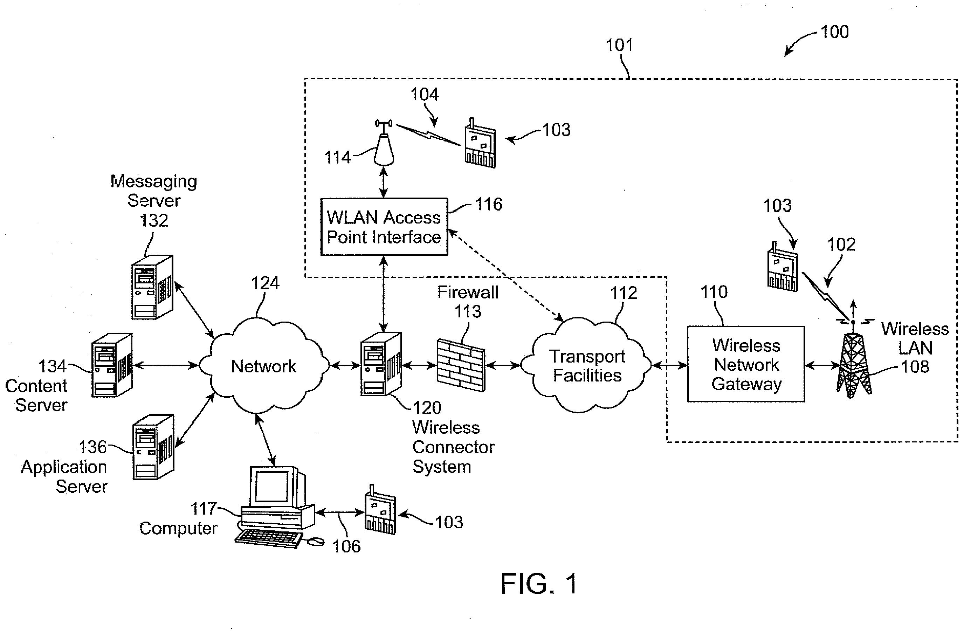

In order to facilitate an understanding of environments in which example implementations described herein can operate, reference is made to FIG. 1, which shows, in block diagram form, a communication system **100** in which implementations of the technology can be applied. The communication system **100** may comprise a number of mobile communication devices **103** that may be connected to the remainder of system **100** in any of several different ways. Accordingly, several instances of mobile communication devices **103** are depicted in FIG. 1 employing different example ways of connecting to system **100.**

These figures are exemplary only, and those persons skilled in the art will appreciate that additional elements and modifications may be necessary to make the communication device, e.g., **103** operable in particular network environments. While in the illustrated implementations, the communication devices, e.g., **103** may comprise smart phones, in other implementations, the communication devices may comprise personal digital assistants (PDA), tablet computers, laptop computers, desktop computers, servers, or other communication devices capable of sending and receiving electronic messages.

Mobile communication devices **103** are connected to a wireless network **101** that may comprise one or more of a Wireless Wide Area Network (WWAN) **102** and a Wireless Local Area Network (WLAN) **104** or other suitable network arrangements. In some implementations, the mobile communication devices **103** are configured to communicate over both the WWAN **102** and WLAN **104,** and to roam between these networks. In some implementations, the wireless network **101** may comprise multiple WWANs **102** and WLANs **104.**

The WWAN **102** may be implemented as any suitable wireless access network technology. By way of example, but not limitation, the WWAN **102** may be implemented as a wireless network that includes a number of transceiver base stations **108** where each of the base stations **108** provides wireless Radio Frequency (RF) coverage to a corresponding area or cell. The WWAN **102** is typically operated by a mobile network service provider that provides subscription packages to users of the mobile communication devices **103.** In some implementations, the WWAN **102** conforms to one or more of the following wireless network types: Mobitex Radio Network, DataTAC, GSM (Global System for Mobile Communication), GPRS (General Packet Radio System), TDMA (Time Division Multiple Access), CDMA (Code Division Multiple Access), CDPD (Cellular Digital Packet Data), iDEN (integrated Digital Enhanced Network), EvDO (Evolution-Data Optimized) CDMA2000, EDGE (Enhanced Data rates for GSM Evolution), UMTS (Universal Mobile Telecommunication Systems), HSPDA (High-Speed Downlink Packet Access), IEEE 802.16e (also referred to as Worldwide Interoperability for Microwave Access or "WiMAX"), or various other networks. Although WWAN **102** is described as a "Wide-Area" network, that term is intended herein also to incorporate wireless Metropolitan Area Networks (WMAN) and other similar technologies for providing coordinated service wirelessly over an area larger than that covered by typical WLANs.

The WWAN **102** may further comprise a wireless network gateway **110** that connects the mobile communication devices **103** to transport facilities **112,** and through the transport facilities **112** to a wireless connector system **120.** Transport facilities may include one or more private networks or lines, the Internet, a virtual private network, or any other suitable network. The wireless connector system **120** may be operated, for example, by an organization or enterprise such as a corporation, university, or governmental department, which allows access to a network **124** such as an internal or enterprise network (e.g., an intranet), and its resources, or the wireless connector system **120** may be operated by a mobile network provider. In some implementations, the network **124** may be realized using the Internet rather than, or in addition to, an internal or enterprise network.

The wireless network gateway **110** provides an interface between the wireless connector system **120** and the WWAN **102,** which facilitates communication between the mobile communication devices **103** and other devices (not shown) connected, directly or indirectly, to the WWAN **102.** Accordingly, communications sent via the mobile communication devices **103** are transported via the WWAN **102** and the wireless network gateway **110** through transport facilities **112** to the wireless connector system **120.** Communications sent from the wireless connector system **120** are received by the wireless network gateway **110** and transported via the WWAN **102** to the mobile communication devices **103.**

The WLAN **104** comprises a wireless network that, in some implementations, conforms to IEEE 802.11x standards (sometimes referred to as Wi-Fi TM) such as, for example, the IEEE 802.11a, 802.11b and/or 802.11g standard. Other communication protocols may be used for the WLAN **104** in other implementations such as, for example, IEEE 802.11n, IEEE 802.16e (also referred to as Worldwide Interoperability for Microwave Access or "WiMAX"), or IEEE 802.20 (also referred to as Mobile Wireless Broadband Access). The WLAN **104** includes one or more wireless RF Access Points (AP) **114** (one of which is shown in FIG. 1) that collectively provide a WLAN coverage area.

The WLAN **104** may be a personal network of the user, an enterprise network, or a hotspot offered by an internet service provider (ISP), a mobile network provider, or a property owner in a public or semi-public area, for example. The access points **114** are connected to an access point (AP) interface **116** that may connect to the wireless connector system **120** directly, (for example, if the access point **114** is part of an enterprise WLAN **104** in which the wireless connector system **120** resides), or indirectly, as indicated by the dashed line in FIG. 1, via the transport facilities **112** if the access point **114** is a personal Wi-Fi network or Wi-Fi hotspot (in which case a mechanism for securely connecting to the wireless connector system **120,** such as a virtual private network (VPN), may be used). The AP interface **116** provides translation and routing services between the access points **114** and the wireless connector system **120** to facilitate communication, directly or indirectly, with the wireless connector system **120.**

The wireless connector system **120** may be implemented as one or more servers, and is typically located behind a firewall **113.** The wireless connector system **120** manages communications, including email, Hypertext Transfer Protocol (HTTP), and HTTP Secure (HTTPS) communications to and from a set of managed mobile communication devices **103.** The wireless connector system **120** also provides administrative control and management capabilities over users and mobile communication devices **103** that might connect to the wireless connector system **120.**

The wireless connector system **120** allows the mobile communication devices **103** to access the network **124** and connected resources and services such as a messaging server **132** (for example, a Microsoft Exchange Server®, IBM Lotus Domino®, or Novell GroupWise™ email server), a content server **134** for providing content such as Internet content or content from an organization's internal servers, application servers **136** for implementing server-based applications such as instant messaging (IM) applications to mobile communication devices **103,** and intranet file services.

The wireless connector system **120** typically provides a secure exchange of data (e.g., email messages, personal information manager (PIM) data, and IM data) with the mobile communication devices **103.** In some implementations, communications between the wireless connector system **120** and the mobile communication devices **103** are encrypted. In some implementations, communications are encrypted using a symmetric encryption key implemented using Advanced Encryption Standard (AES) or Triple Data Encryption Standard (Triple DES) encryption. Private encryption keys are generated in a secure, two-way authenticated environment and are used for both encryption and decryption of data. In some implementations, the private encryption key is stored only in the user's mailbox on the messaging server **132** and on the mobile communication device **103,** and can typically be regenerated by the user on mobile communication devices **103.** Data sent to the mobile communication devices **103** is encrypted by the wireless connector system **120** using the private encryption key retrieved from the user's mailbox. The encrypted data, when received on the mobile communication devices **103,** is decrypted using the private encryption key stored in memory. Similarly, data sent to the wireless connector system **120** from the mobile communication devices **103** is encrypted using the private encryption key stored in the memory of the mobile communication device **103.** The encrypted data, when received on the wireless connector system **120,** is decrypted using the private encryption key retrieved from the user's mailbox.

The wireless network gateway **110** is adapted to send data packets received from the mobile communication device **103** over the WWAN **102** to the wireless connector system **120.** The wireless connector system **120** then sends the data packets to the appropriate connection point such as the messaging server **132** or content servers **134** or application server **136.** Conversely, the wireless connector system **120** sends data packets received, for example, from the messaging server **132** or content servers **134** or application servers **136** to the wireless network gateway **110** that then transmit the data packets to the destination mobile communication device **103.** The AP interfaces **116** of the WLAN **104** provide similar sending functions between the mobile communication device **103,** the wireless connector system **120** and network connection point such as the messaging server **132,** content server **134** and application server **136.**

The network **124** may comprise a private local area network, metropolitan area network, wide area network, the public Internet or combinations thereof and may include virtual networks constructed using any of these, alone, or in combination. A mobile communication device **103** may alternatively connect to the wireless connector system **120** using a computer **117,** such as desktop or notebook computer, via the network **124.** A link **106** may be provided for exchanging information between the mobile communication device **103** and a computer **117** connected to the wireless connector system **120.** The link **106** may comprise one or both of a physical interface and short-range wireless communication interface. The physical interface may comprise one or combinations of an Ethernet connection, Universal Serial Bus (USB) connection, Firewire™ (also known as an IEEE 1394 interface) connection, or other serial data connection, via respective ports or interfaces of the mobile communication device **103** and computer **117.** The short-range wireless communication interface may be a personal area network (PAN) interface. A Personal Area Network is a wireless point-to-point connection meaning no physical cables are used to connect the two end points. The short-range wireless communication interface may comprise one or a combination of an infrared (IR) connection such as an Infrared Data Association (IrDA) connection, a short-range radio frequency (RF) connection such as one specified by IEEE 802.15.1 or the BLUETOOTH special interest group, or IEEE 802.15.3a, also referred to as UltraWideband (UWB), or other PAN connection.

It will be appreciated that the above-described communication system is provided for the purpose of illustration only, and that the above-described communication system comprises one possible communication network configuration of a multitude of possible configurations for use with the mobile communication devices **103.** Suitable variations of the communication system will be understood to a person of skill in the art and are intended to fall within the scope of the present disclosure.

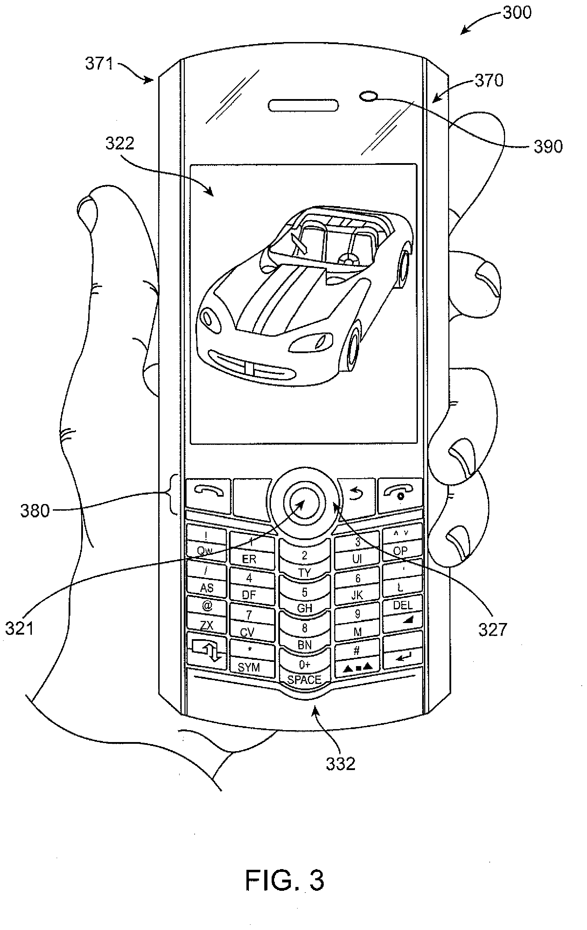

As will be appreciated from FIG. 3, an exemplary mobile communication device **300** (as an example of **103**) comprises a display **322** located above a keyboard **332** constituting a user input means that is suitable for accommodating textual input to the device **300.** In some implementations, the keyboard **332** can be part of a touch screen display. The front face **370** of the device **300** has a navigation row **380.** As shown, the device **300** is of uni-body construction, also known as a "candy-bar" design.

The device **300** may include an auxiliary input that acts as a cursor navigation tool **327** and that may be also exteriorly located upon the front face **370** of the device **300**. The front face location of a cursor navigation tool **327** allows the tool to be thumb-actuable, e.g., like the keys of the keyboard **332.** Some implementations of the technology provide the navigation tool **327** in the form of a trackball **321** that may be utilized to instruct two-dimensional screen cursor movement in substantially any direction, as well as act as an actuator when the trackball **321** is depressed like a button. Other implementations can provide the navigation tool in the form of a trackpad, a touchpad, a pointing stick, joystick, graphics tablet, or combinations thereof. The placement of the navigation tool **327** can be above the keyboard **332** and below the display screen **322;** here, it may avoid interference during keyboarding and does not block the operator's view of the display screen **322** during use.

The device **300** may be configured to send and receive messages. The device **300** includes a body **371** that can, in some implementations, be configured to be held in one hand by an operator of the device **300** during text entry. A display **322** is included that is located on a front face **370** of the body **371** and upon which information is displayed to the operator, e.g., during text entry. The device **300** may also be configured to send and receive voice communications such as mobile telephone calls. The device **300** also can include a camera (not shown) to allow the device **300** to take electronic photographs that can be referred to as photos or pictures. Further, the device **300** can be configured to operate a web browser.

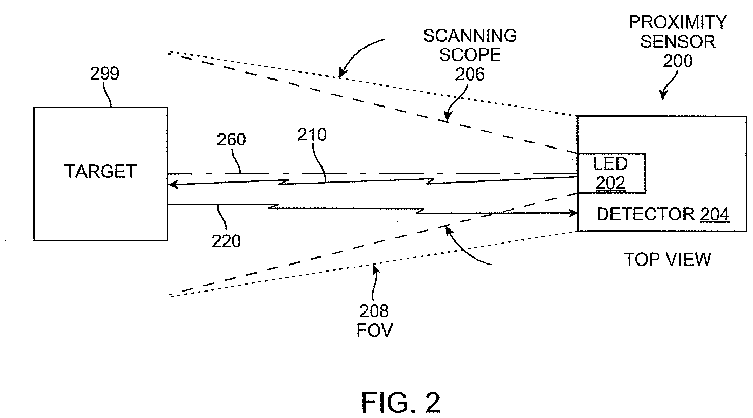

The device **300** may further contain a sensor, e.g., proximity sensor, e.g., **200** of FIG. 2, behind a cover **390** mounted in an aperture **371'** defined in body **371.** In devices where substantially all the front face **370** of the device is a touch screen, a portion of the touch screen can constitute the cover.

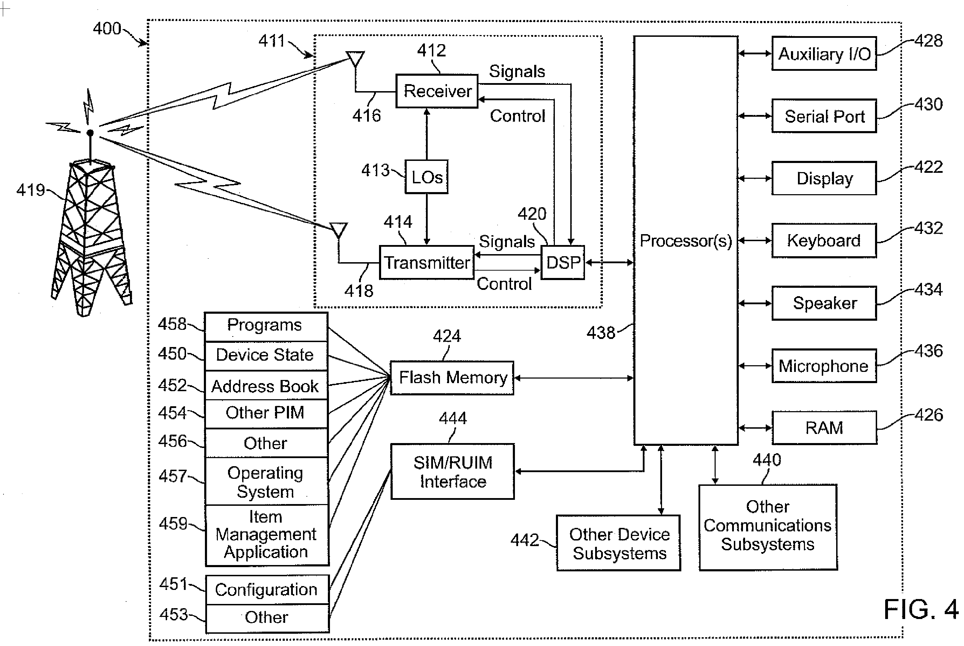

Referring to FIG. 4, a block diagram of a communication device, such as **300** and **103,** in accordance with an exemplary implementation is illustrated. As shown, the device **400** includes a processor **438** that controls the operation of the communication device **400.** A communication subsystem **411** performs communication transmission and reception with the wireless network **419.** The microprocessor **438** further can be communicatively coupled with an auxiliary input/output (I/O) subsystem **428.** In at least one implementation, the processor **438** can be communicatively coupled to a serial port (for example, a Universal Serial Bus port) **430** that can allow for communication with other devices or systems via the serial port **430.** A display **422** (e.g., **322**) can be communicatively coupled to processor **438** to allow for display of information to an operator of the communication device **400.** When the communication device **400** is equipped with a keyboard **432** (e.g., **332**), the keyboard can also be communicatively coupled with the processor **438.** The communication device **400** can include a speaker **434,** a microphone **436,** random access memory (RAM) **426,** and flash memory **424,** all of which may be communicatively coupled to the processor **438.** Other similar components may be provided on the communication device **400** as well and optionally communicatively coupled to the processor **438.** Other communication subsystems **440** and other device subsystems **442** are generally indicated as being functionally connected with the processor **438** as well. An example of a communication subsystem **440** is a short range communication system such as BLUETOOTH® communication module or a WI-FI® communication module (a communication module in compliance with IEEE 802.11b) and associated circuits and components. Examples of other device subsystem **442** include sensor **200** of FIG. 2 and implementations of the present technology.

Additionally, the processor **438** is able to perform operating system functions and enables execution of programs on the communication device **400.** In some implementations not all of the above components are included in the communication device **400.** For example, in at least one implementation, the keyboard **432** is not provided as a separate component and is instead integrated with a touch screen as described below.

The auxiliary I/O subsystem **428** can take the form of a variety of different navigation tools (multi-directional or single-directional) such as a trackball navigation tool **321,** as illustrated in the exemplary implementation shown in FIG. 3, or a thumbwheel, a navigation pad, a joystick, touch-sensitive interface, or other I/O interface. These navigation tools may be located on the front surface of the communication device **400** or may be located on any exterior surface of the communication device **400.** Other auxiliary I/O subsystems may include external display devices and externally connected keyboards (not shown). While the above examples have been provided in relation to the auxiliary I/O subsystem **428,** other subsystems capable of providing input or receiving output from the communication device **400** are considered within the scope of this disclosure. Additionally, other keys may be placed along the side of the communication device **300** to function as escape keys, volume control keys, scrolling keys, power switches, or user programmable keys, and may likewise be programmed accordingly.

The keyboard **432** can include a plurality of keys that can be of a physical nature such as actuable buttons, or they can be of a software nature, typically constituted by representations of physical keys on a display **422** (referred to herein as "virtual keys"). It is also contemplated that the user input can be provided as a combination of the two types of keys. Each key of the plurality of keys is associated with at least one action which can be the input of a character, a command or a function. In this context, "characters" are contemplated to exemplarily include alphabetic letters, language symbols, numbers, punctuation, insignias, icons, pictures, and even a blank space.

In the case of virtual keys, the indicia for the respective keys are shown on the display **422,** which in one implementation is enabled by touching the display **422,** for example, with a stylus, finger, finger tip, finger nail, or other pointer, to generate the character or activate the indicated command or function. Some examples of displays **422** capable of detecting a touch include resistive, capacitive, projected capacitive, infrared and surface acoustic wave (SAW) touch screens.

Physical and virtual keys can be combined in many different ways as appreciated by those skilled in the art. In one implementation, physical and virtual keys are combined such that the plurality of enabled keys for a particular program or feature of the communication device **400** is shown on the display **422** in the same configuration as the physical keys. Using this configuration, the operator can select the appropriate physical key corresponding to what is shown on the display **422.** Thus, the desired character, command or function is obtained by depressing the physical key corresponding to the character, command or function displayed at a corresponding position on the display **422,** rather than touching the display **422.**

Furthermore, the communication device **400** is equipped with components to enable operation of various programs, as shown in FIG. 4. In an exemplary implementation, the flash memory **424** is enabled to provide a storage location for the operating system **457,** device programs **458,** and data. The operating system **457** is generally configured to manage other programs **458** that are also stored in memory **424** and executable on the processor **438.** The operating system **457** honors requests for services made by programs **458** through predefined program interfaces. More specifically, the operating system **457** typically determines the order in which multiple programs **458** are executed on the processor **438** and the execution time allotted for each program **458,** manages the sharing of memory **424** among multiple programs **458,** handles input and output to and from other device subsystems **442,** and so on. In addition, operators typically can interact directly with the operating system **457** through a user interface usually including the keyboard **432** and display **422.** While in an exemplary implementation the operating system **457** is stored in flash memory **424,** the operating system **457** in other implementations is stored in read-only memory (ROM) or similar storage element (not shown). As those skilled in the art will appreciate, the operating system **457,** device program **458,** or parts thereof, may be loaded in RAM **426** or other volatile memory,

In some implementations, the flash memory **424** may contain programs **458** for execution on the device **400,** including - but not limited to - an address book **452,** a personal information manager (PIM) **454,** and a device state **450.** Furthermore, programs **458,** such as social software, and other information **456** including data can be segregated upon storage in the flash memory **424** of the device **400.**

When the communication device **400** is enabled for two-way communication within the wireless communication network **419,** it can send and receive signals from a mobile communication service. Examples of communication systems enabled for two-way communication include, but are not limited to, the General Packet Radio Service (GPRS) network, the Universal Mobile Telecommunication Service (UMTS) network, the Enhanced Data for Global Evolution (EDGE) network, the Code Division Multiple Access (CDMA) network, High-Speed Packet Access (HSPA) networks, Universal Mobile Telecommunication Service Time Division Duplexing (UMTS-T9), Ultra Mobile Broadband (UMB) networks, Worldwide Interoperability for Microwave Access (WiMAX), and other networks that can be used for data and voice, or just data or voice. For the systems listed above, the communication device **400** may use a unique identifier to enable the communication device **400** to transmit and receive signals from the communication network **419.** Other systems may not use such identifying information. GPRS, UMTS, and EDGE use a Subscriber Identity Module (SIM) in order to allow communication with the communication network **419.** Likewise, most CDMA systems use a Removable User Identity Module (RUIM) in order to communicate with the CDMA network. The RUIM and SIM card can be used in multiple different communication devices **400.** The communication device **400** can be configured to operate some features without a SIM/RUIM card, but it will not necessarily be able to communicate with the network **419.** A SIM/RUIM interface **444** located within the communication device **400** allows for removal or insertion of a SIM/RUIM card (not shown). The SIM/RUIM card features memory and holds key configurations **451,** and other information **453** such as identification and subscriber related information. With a properly enabled communication device **400,** two-way communication between the communication device **400** and communication network **419** is possible.

If the communication device **400** is enabled as described above or the communication network **419** does not use such enablement, the two-way communication enabled communication device **400** is able to both transmit and receive information from the communication network **419.** The transfer of communication can be from the communication device **400** or to the communication device **400.** In order to communicate with the communication network **419,** the device **400** can be equipped with an integral or internal antenna **418** for transmitting signals to the communication network **419.** Likewise the device **400** can be equipped with another antenna **416** for receiving communication from the communication network **419.** These antennae **(416, 418)** in another exemplary implementation are combined into a single antenna (not shown). As one skilled in the art would appreciate, the antenna or antennae **(416, 418)** in another implementation can be externally mounted on the communication device **400.**

When equipped for two-way communication, the communication device **400** features a communication subsystem **411.** As is understood in the art, this communication subsystem **411** is modified so that it can support the operational needs of the communication device **400.** The subsystem **411** includes a transmitter **414** and receiver **412** including the associated antenna or antennae **(416, 418)** as described above, local oscillators (LOs) **413,** and a processing module that in the presently described exemplary implementation is a digital signal processor (DSP) **420.**

It is contemplated that communication by the communication device **400** with the wireless network **419** can be any type of communication that both the wireless network **419** and communication device **400** are enabled to transmit, receive and process. In general, these can be classified as voice or data, or both voice and data. Voice communication generally refers to communication in which signals for audible sounds are transmitted by the communication device **400** through the communication network **419.** Data generally refers to all other types of communication that the communication device **400** is capable of performing within the constraints of the wireless network **419.**

Example device programs that can depend on such data include email, contacts and calendars. For each such program, synchronization with home-based versions of the program can be desirable for either or both of their long term and short term utility. As an example, emails are often time-sensitive, so substantially real time (or near-real time) synchronization may be desired. Contacts, on the other hand, can be usually updated less frequently without inconvenience. Therefore, the utility of the communication device **400** is enhanced when connectable within a communication system, and when connectable on a wireless basis in a network **419** in which voice, text messaging, and other data transfer are accommodated. Device **400** can include programs such as a web browser, a file browser, and client programs for interacting with server programs. Devices, e.g., **103, 300, 400,** for use in the technology can be characterized by an identification number assigned to the device. Such identification numbers cannot be changed and are locked to each device.

Implementations of the technology can be realized as including programming on a mobile communications device, e.g., **103.** In some implementations, programming for the technology is on the mobile communications device **103,** while data used by the mobile communications device **103** is on the wireless connector system **120** or a network server such as content server **134,** messaging server **132,** or application server **136.** In some implementations, programming for the technology can be realized on a remote server. Allocation of functionality among architectural elements can be a function of several factors including latency, processing resource availability and efficient usage, storage availability and efficient usage, and revenue opportunities.

As noted herein with respect to FIG. 3, device **300** can contain a proximity sensor. A typical proximity sensor can detect the presence of an object proximate to the sensor without physical contact between the object and the sensor. Typical active proximity sensors emit an electromagnetic or electrostatic field, or a beam of electromagnetic radiation, and can detect changes in the field or in a return signal. The object being sensed is typically referred to as the proximity sensor's "target." The area where the sensor is design to detect a proximate target can be referred to as the "target area."

Referring to FIG. 2, an IR proximity sensor **200** can emit beams of invisible IR radiation **210** from an IR energy source, e.g., an LED **202.** A detector **204** of the proximity sensor **200** detects reflections **220** of this radiation. These reflections **220** allow the IR proximity sensor **200** to determine whether there is a target **299** nearby. For the purpose of this disclosure, "light" refers to electromagnetic energy in the ultraviolet, visible, and infrared portions of the electromagnetic spectrum; and the energy source also is referred to as a "light source" and an "emitter." While the target is shown having a uniform surface for simplicity of illustration, targets can have non-uniform surfaces.

A proximity sensor LED **202** can be characterized by a scanning scope, e.g., the volume to which a substantial majority of the reflectable energy of the light source **202** is emitted. FIG 2 illustrates the top view plane scanning scope **206** of the light source **202** in a view labeled "TOP VIEW," A typical scanning scope for a proximity sensor light source is fifteen (15) degrees, though the drawings are not necessarily to proportion in order to more clearly convey the concepts. The detector **204** can likewise be characterized by a field of view (FOV), e.g., the volume from which the detector can effectively detect energy. FIG. 2 illustrates the top view plane detector FOV **208.** For simplicity, scanning scope **206** and FOV **208** arc shown as substantially symmetrical about a common axis **260.**

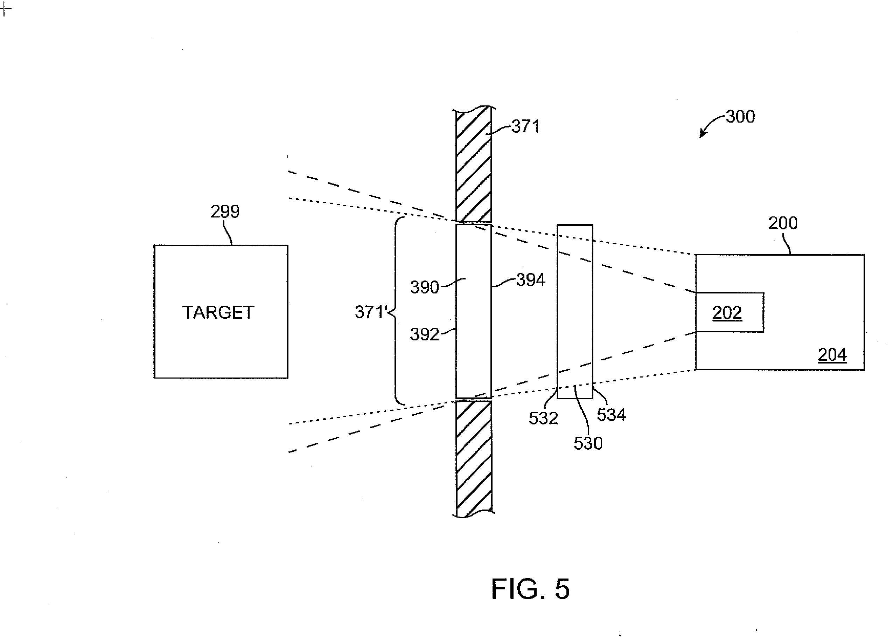

Referring to FIG. 5, a typical IR proximity sensor **200** is shown in as typically installed in a mobile device **300.** Device body **371** defines an aperture **371'** therein. Embodiments of the present technology include elements substantially at the device body **371** and interior to the device body **371.** As in FIG. 2, the proximity sensor **200** includes an light source **202** and a detector **204.** A cover **390** can be mounted in the aperture **371'.** As mounted, the cover **390** has a cover exterior-facing surface **392** and a cover interior-facing surface **394** - where "interior facing" and "exterior facing" are with respect to the device body **371.** The cover is typically transparent to the light over the frequency range used in the proximity sensor. Additional components, e.g., light guide **530** having light guide exterior-facing surface **532** and light guide interior facing surface **534,** can be included in the mobile device in conjunction with proximity sensor **200.**

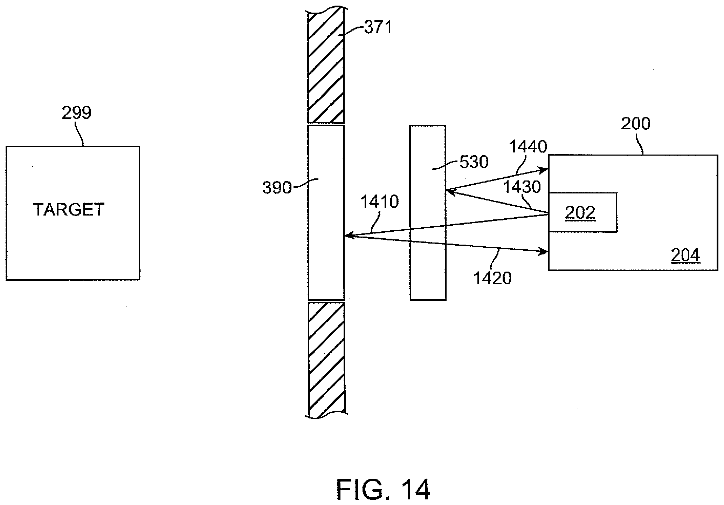

As noted elsewhere herein, proximity sensors can be susceptible to false readings due detection of energy other than emitted energy **210** reflected off an intended target, e.g., **299.** Referring to FIG. 14, in many IR proximity sensor applications, IR radiation **1410** from the energy source **202** may reflect off the cover **390** as energy **1420** back on the detector **204,** as shown in FIG. 14, and cause noise issues. Other modes of reflection and refraction between the proximity sensor **200** and objects other than the target **299** can also produce noise in a proximity sensor, e.g., energy **1430** reflected off light guide **530** as energy **1440** and incident on detector **204.** Using a narrow output angle for the energy source **220** can mitigate such noise, but will impact the scanning scope of the device. Providing a textured cover exterior-facing surface **392** also can mitigate noise, however users of mobile communication devices may be concerned with appearance of the device in addition to device functionality. Such users may not desire a textured surface to the exterior of the cover.

Additionally, while it is desirable to increase the field-of-view (FOV) of the detector, mobile communication device geometries limit the FOV achievable with conventional technology. Further, the limited power available in mobile devices incentivizes design approaches that are energy efficient. Even further yet, it can be advantageous to pair an energy source and a detector that are not substantially co-located as shown in FIG. 2, FIG. 5, and FIG. 14.

Implementations of the present technology include light focusing devices, e.g., microlcnscs, microprisms, conventional lenses, Fresnel lenses, and arrays of each, to focus light from the light source, and to focus light reflected off a target to improve scanning scope and FOV. Generally, focusing devices can include converging lenses (with positive focal length) such as bi-convex and plano-convex simple lenses, diverging lenses (with negative focal length) such as biconcave and plano-concave simple lenses, microlens arrays, microprism arrays, and Fresnel lenses.

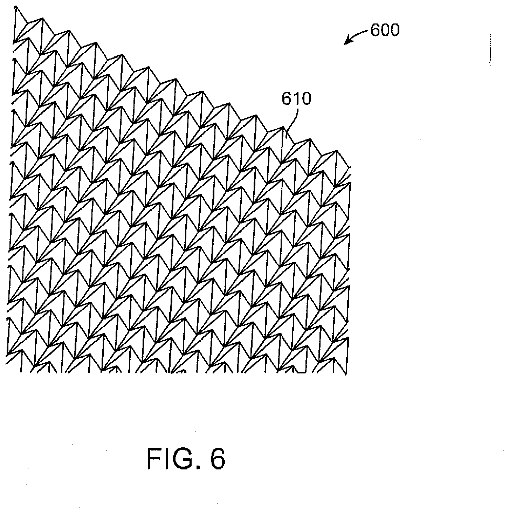

Referring to FIG. 6 a section of a microprism array lens **600** is shown. In the illustrated section, each microprism **610** has four asymmetrically disposed (4) facets - though only three (3) are visible in FIG. 6. Other facet arrangements are available, e.g., as described below, including symmetrically disposed pyramid facets. In the illustrated section, the microprisms **610** are arranged in a regular row, e.g., **620,** by column, e.g., **630** array, though other arrangements are contemplated as described below.

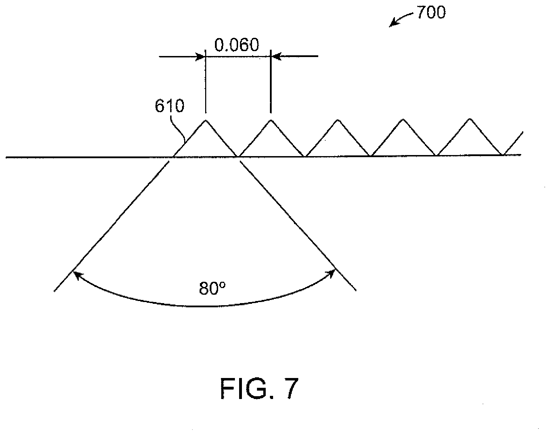

FIG. 7 illustrates relative geometry **700** between typical microprisms (here shown as a single row of a matrix microprism array). The illustrated microprisms, e.g., **610,** are 0.060 mm wide spaced on 0.060 mm centers (pitch), other geometries, including pitch greater than microprism width are contemplated. The angle **720** between facets is shown as 80 degrees, though other angles are contemplated, with steeper angles generally giving greater angles to the edge of the FOV. For example, to obtain the benefits of the present technology, each of prism pitch and prism width can vary between 0.01mm and 2mm, while prism angle can vary between 30 degrees and 160 degrees.

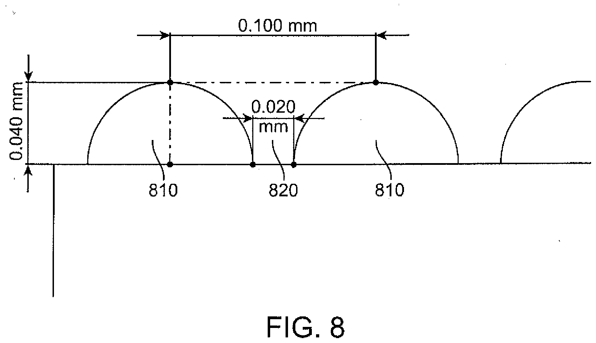

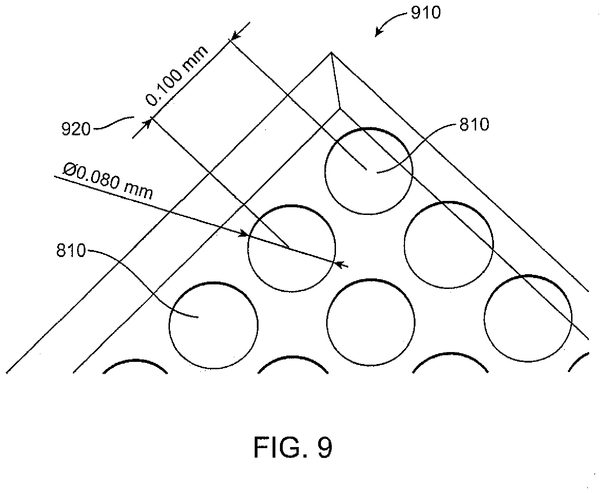

Referring to FIG. 8 and FIG. 9, microlenses, e.g., **1410,** are small lenses, generally with diameters less than a millimeter (mm) and often as small as 10 micrometers (µm). FIG. 9 shows convex microlenses **1410** with a diameter **920** of 0.080 mm and spaced on 0.100 mm centers. Other simple lens types can be used. Microlens arrays can contain multiple lenses formed in a one-dimensional or two-dimensional array, e.g., **910** showing a section of a rectangular microlens array, on a supporting substrate. If the individual lenses have circular apertures and are not allowed to overlap they may be placed in a hexagonal array to obtain maximum coverage of the substrate. However there will still be gaps, e.g., **1420,** between the lenses that can be reduced by making the microlenses with non-circular apertures.

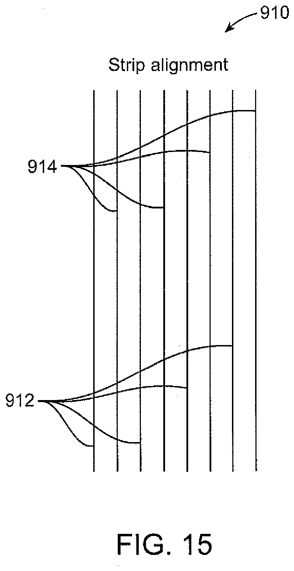

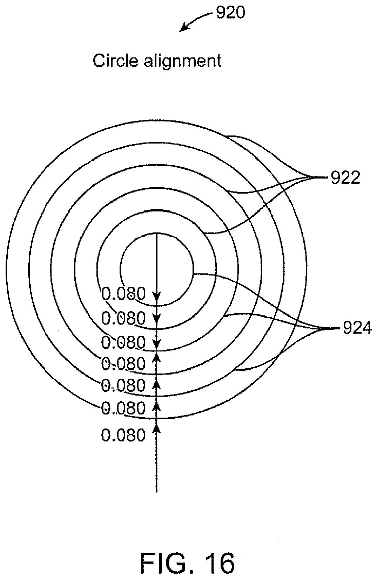

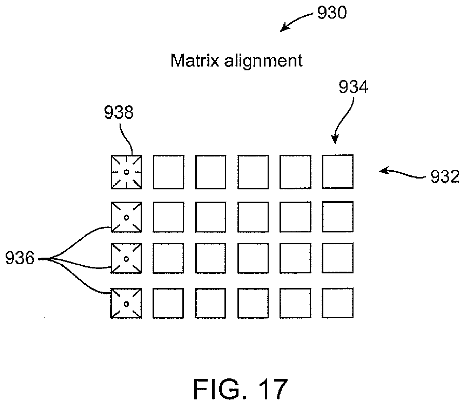

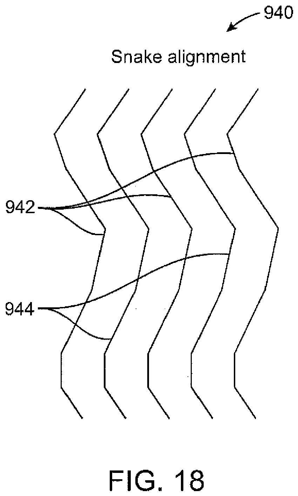

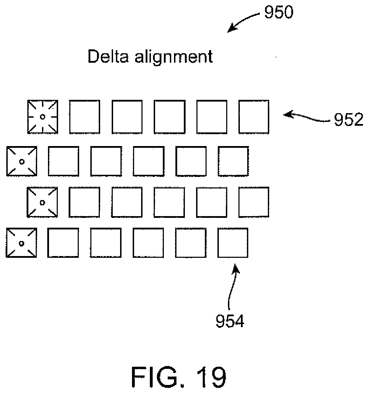

FIGs. 15-19 illustrate various microprism facets and array alignments, i.e., strip array alignment **910** in which the lines **912** represent peaks and lines **914** represent troughs; circle alignment **920** in which the lines **922** represent peaks and lines **924** represent troughs; matrix alignment **930** in which the microprisms are arrayed in rows, e.g., **932,** and columns, e.g., **934** and example four-facet symmetrical microprisms **936** and an eight-facet symmetrical microprism **938** are shown; snake alignment **940** in which lines **942** represent peaks and lines **944** represent troughs; and delta alignment **950** similar to matrix alignment **930** except that columns **954** are offset every other row **952.** Each combination of microarray characteristics, e.g., alignment, number of facets, orientation of facets, symmetry among facets of a microprism (for directing one or both of scanning scope and FOV), and space between features, can produce a different scanning scope (if the microarray is placed in the energy path of the energy source) and FOV (if the microarray is placed in the energy path of the detector). The alignments also represent examples of other light focusing device array alignments.

Implementations of the present technology include proximity sensor assemblies and electronic devices with at least one light focusing device, e.g., a microprism array, on at least one surface in the device within at least one of the scanning scope and FOV of at least one proximity sensor of the device. Including a light focusing device such as a microprism array in an optical path between at least one element of a proximity sensor and the exterior of a device can be used to: increase the outer limits of the scanning scope (e.g., when placed in the optical path of the energy source) and FOV (e.g., when placed in the optical path of the detector); change the axis of the scanning scope and FOV (e.g., for aligning the axis with anticipated target positions, for locating the energy source separate from the detector such as when a common energy source and multiple detectors are used), focusing emitted or reflected proximity sensor energy (e.g., focusing outbound energy from narrow-beam LED to decrease reflection from the device body and internal components, then broaden outer boundaries of the scanning scope; focusing inbound energy to increase FOV an increase the percentage of such energy that reaches detector), while achieving cosmetic traits with less effect on performance than non-light focusing device features.

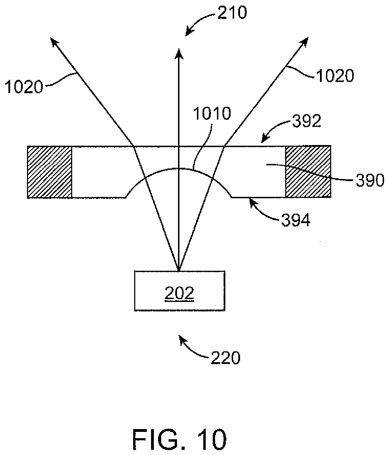

Referring to FIG. 10 - FIG. 13, implementations of the technology using simple lenses are shown. In FIG. 10 a cover lens **390** as a plano-concave lens - with concave portion **1010** on the inside **394** of the cover lens **390** over the emitter **202** is shown. This configuration can be used to increase the scanning scope **206** of the proximity sensor, e.g., as indicated by rays **1020.**

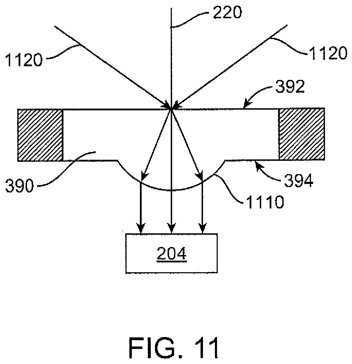

In FIG. 11 a cover lens **390** as a plano-convex lens - with convex portion **1110** on the cover lense interior surface **394** over the detector **204** is shown. This configuration can be used to increase the FOV **208** of the proximity sensor, e.g., as indicated by rays **1120.**

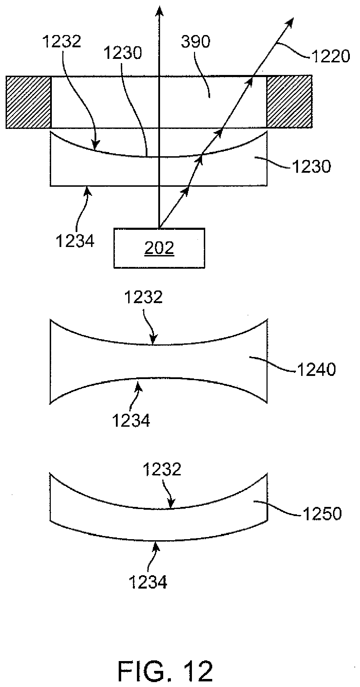

In FIG. 12 a conventional cover lens **390** and a light guide **1230** are shown as part of the implementation over an emitter **202.** The light guide **1230** is shown as a plano-concave simple lens with concave portion **1232** as the light guide exterior portion **1232.** This configuration can provide increased scanning scope, e.g., as indicated by rays **1220.** Both a bi-concave simple lens **1240** and negative meniscus simple lens **1250** also can be used in this configuration. Each of plano-concave lens **1230,** bi-concave lens **1240,** and negative meniscus lens **1250** can be used to increase the scanning scope when placed over the emitter **202.**

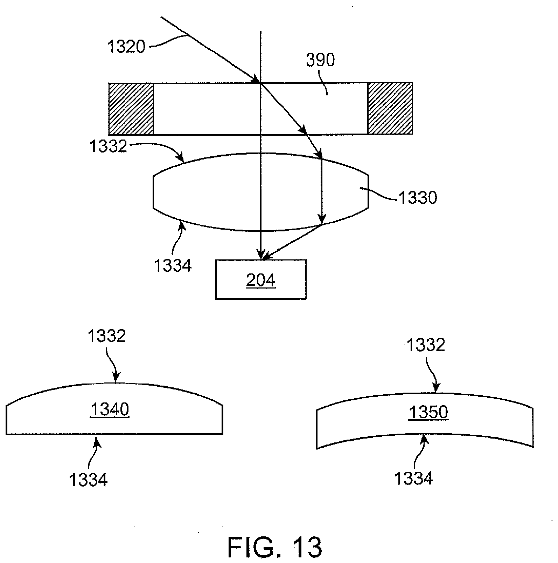

In FIG. 13 a conventional cover lens **390** and a light guide **1330** are shown as part of the implementation over a detector **204.** The light guide **1330** is shown as a bi-convex simple lens. This configuration can provide increased FOV as indicated by rays **1320.** Both a plano-convex simple lens **1340** and negative meniscus simple lens **1350** also can be used in this configuration. Each of plano-concave lens **1330,** bi-concave lens **1340,** and negative meniscus lens **1350** can be used to increase the proximity sensor FOV **208** when placed over the emitter **202.**

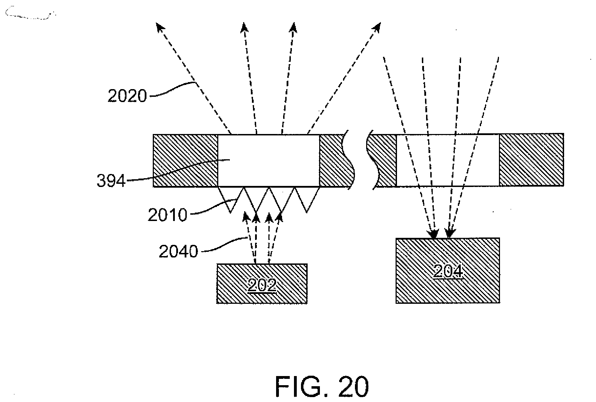

Referring to FIG. 20 - FIG. 25, various implementations of the technology using microprism arrays installed in a mobile electronic device are shown. In these implementations, the emitter **202** and the detector **204** are shown separately to convey that an emitter **202** and a detector (including a plurality of detectors) can be separately located on a device **300.**

In embodiments of the technology such as those shown in FIG. 20, a microprism array lens **2010** is disposed on the cover lens interior surface **394** over an emitter **202** to increase the scanning scope of the emitter as shown by the increased divergence of rays **2040** from rays **2020.** While a microprism array is used to illustrate light focusing devices in FIG. 20 - FIG. 25, other light focusing devices, including those identified herein, can be used.

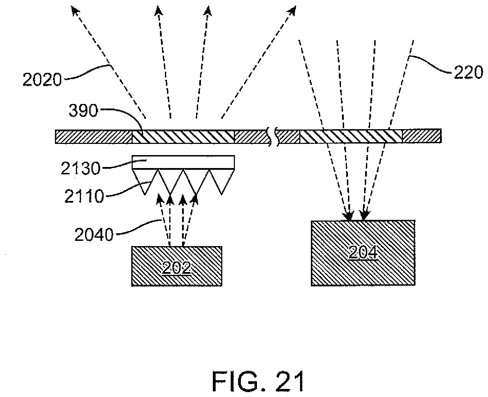

In embodiments of the technology such as those shown in FIG. 21, a microprism array lens **2110** is disposed in a light guide **2130** interior surface over an emitter **202** to increase the scanning scope of the emitter as shown by the increased divergence of rays **2040** from rays **2020.**

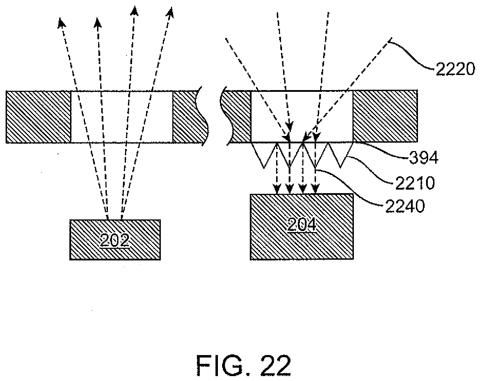

In embodiments of the technology such as those shown in FIG. 22, a microprism array lens **2210** is disposed on the cover lens interior surface **394** over an detector **204** to increase the FOV of the detector **204** as shown by the greater divergence of rays **2240** over rays **2220.**

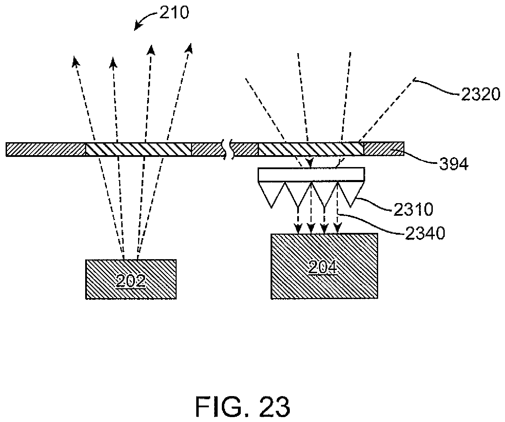

In embodiments of the technology such as those shown in FIG. 23, a microprism array **2310** is disposed in a light guide **2330** interior surface over a detector **204** to increase the FOV of the detector **204** as shown by the greater divergence of rays **2340** over rays **2320.**

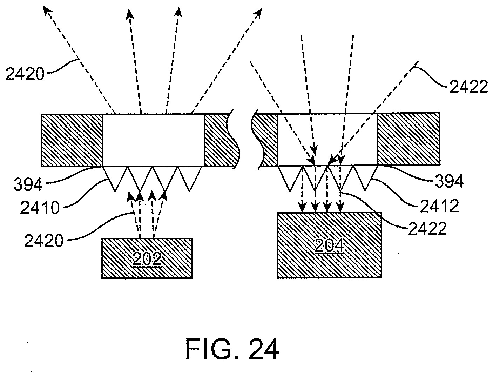

In embodiments of the technology such as those shown in FIG. 24, ,microprism array lenses **2410** and **2412** are each disposed on a cover lens interior surface **394** of a cover lens over the emitter **202** and detector **204** respectively. The microprism array lens **2410** increases the scanning scope of the detector **202** as indicated by the increased range of angles between rays **2420** and **2440.** The microprism array lens **2412** increases the FOV of the detector **204** as indicated by the lesser angle range of rays **2412** compared to rays **2422.**

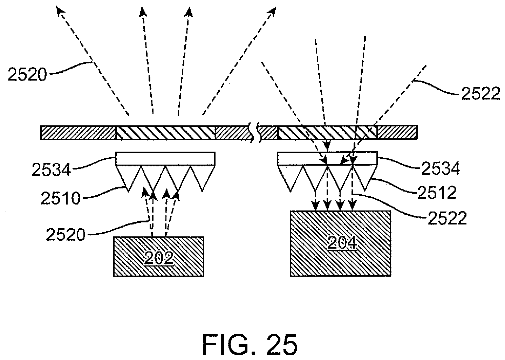

In embodiments of the technology such as those shown in FIG. 25, microprism array lenses **2510** and **2512** are each disposed on a light guide interior surface **2534** over the emitter **202** and detector **204** respectively. The microprism array lens **2510** increases the scanning scope of the detector **202** as indicated by the increased range of angles between rays **2520** and **2440.** The microprism array lens **2512** increases the FOV of the detector **204** as indicated by the lesser angle range of rays **2512** compared to rays **2522.**

Other implementations of the technology include using light focusing devices of various types within one electronic device, e.g., a microprism array over the emitter to increase the limits of the scanning scope, and a plano-concave lens (or a plano-concave microlens array) on the underside of the cover over a detector to increase the FOV of that detector.

Devices employing proximity detectors disclosed herein are intended to operate at least in part by sensing energy reflected off a user from an energy source located in the device. Such devices are typically handheld, and as such, have limited batteries, making power consumption of the energy source, e.g., LED laser, an important concern. In some implementations, the present technology uses an ambient light sensor to determine the ambient light. The device then determines an energy source setting at a margin above the minimum energy expected to be required for proper operation of the proximity sensor given the ambient light conditions.

In some implementations, the technology includes an electronic device comprising a body defining an aperture, a speaker, a microprism array lens, mounted in the aperture; and a proximity sensor. The proximity sensor comprising an energy source. The proximity sensor is positioned behind the microprism array lens in the interior of the body. The proximity sensor is operative to signal the proximity of an object to the proximity sensor. The electronic device also includes a processor in communication with the speaker and the proximity sensor. The electronic device further includes a computer program product comprising at least one computer readable medium, and at least one program module. The program module is stored on the medium and is operable upon execution by the processor to control the volume of the speaker at least in part as a function of the proximity sensor signal.

In some implementations, the device further includes an ambient light sensor in communication with the at least on processor. In those implementations, the proximity sensor includes an energy source in communication with the at least one processor, and the computer program product controls the energy of the energy source at least in part as a function of the sensed ambient light. In some implementations, control of the energy source comprises controlling the power level of the energy source by determining a minimum power required to for the proximity sensor to sense a proximate object under the sensed ambient light, and setting the power level of the energy source the determined minimum power.

The technology can take the forms of hardware, or both hardware and software elements. In some implementations, the technology is implemented in software, which includes but is not limited to firmware, resident software, microcode, a Field Programmable Gate Array (FPGA) or Application-Specific Integrated Circuit (ASIC), etc. In particular, for real-time or near real-time use, an FPGA or ASIC implementation is desirable.

Furthermore, some implementations of the present technology can take the form of a computer program product comprising program modules accessible from computer-usable or computer-readable medium storing program code for use by or in connection with one or more computers, processors, or instruction execution system. For the purposes of this description, a computer-usable or computer readable medium can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium (though propagation mediums in and of themselves as signal carriers are not included in the definition of physical computer-readable medium). Examples of a physical computer-readable medium include a semiconductor or solid state memory, removable memory connected via USB, magnetic tape, a removable computer diskette, a random access memory (RAM), a read-only memory (ROM), a rigid magnetic disk and an optical disk. Current examples of optical disks include compact disk - read only memory (CD-ROM), compact disk - read/write (CD-R/W), DVD, and Blu Ray™. Both processors and program code for implementing each as aspect of the technology can be centralized or distributed (or a combination thereof) as known to those skilled in the art.

A data processing system suitable for storing a computer program product of the present technology and for executing the program code of the computer program product will include at least one processor coupled directly or indirectly to memory elements through a system bus. The memory elements can include local memory employed during actual execution of the program code, bulk storage, and cache memories that provide temporary storage of at least some program code in order to reduce the number of times code must be retrieved from bulk storage during cxccution. Input/output or I/O devices (including but not limited to keyboards, displays, pointing devices, etc.) can be coupled to the system either directly or through intervening I/O controllers. Network adapters can also be coupled to the system to enable the data processing system to become coupled to other data processing systems or remote printers or storage devices through intervening private or public networks. Modems, cable modem, WiFi, and Ethernet cards are just a few of the currently available types of network adapters. Such systems can be centralized or distributed, e.g., in peer-to-peer and client/server configurations. In some implementations, the data processing system is implemented using one or both of FPGAs and ASICs.

## Claims

1. A mobile communication device (300) comprising:
a body (317) defining an aperture (371');
a light source (202):
the light source (202) positioned interior to the body (317), and
the light source (202) operative to emit light toward a target area exterior to the body (317);
a detector (204):
the detector (204) positioned interior to the body (317), and
the detector (204) operative to detect light, including light from the light source (202) reflected from the target area;
a cover (390):
the cover (390) positioned in the aperture (371'), and
the cover (390) positioned substantially in an optical path:
between the light source (202) and the target area, and
between the target area and the detector (204); and
a first light focusing device (2010; 2110), wherein the first light focusing device comprises diverging lens (390) substantially in the optical path between the light source (202) and the target area, **characterized in that** the diverging lens (390) is a microprisms array including microprisms arranged in rows (952) and columns (954) such that the microprism columns are offset every other row.

2. The device of claim 1 wherein the diverging lens is formed on the interior surface of the cover (390).

3. The device of claim 1 further comprising a second light focusing device (394; 1330; 1340; 1350; 2210; 2310; 2412; 2512) in a second optical path between the target area and the first detector (204), the second light focusing device (394; 1330; 1340; 1350; 2210; 2310; 2412; 2512) being configured to increase the field of view of the first detector (204).

4. The device of claim 3 wherein the second light focusing device is a converging lens (394) substantially in the optical path between the target area and the detector (204).

5. The device of claim 3 wherein the converging lens is a microprism array (2210) formed on the interior surface of the cover (390).

6. The device of claim 4 wherein the converging lens subassembly comprises a microlens.

7. The device of claim 1, further comprising a second detector (204) operative to detect light, including light from the light source (202) reflected from a target in a second target area.

8. The device of claim 7 further comprising a further light focusing device in a further optical path between the light source (202) and the second detector (204), the further optical path including the path of light from the light source (202) reflected from the second target area.

## Patentansprüche

1. Mobilkommunikationsvorrichtung (300), die Folgendes umfasst:
einen Körper (317), der eine Öffnung (371') definiert;
eine Lichtquelle (202),
wobei die Lichtquelle (202) innerhalb des Körpers (317) positioniert ist und
die Lichtquelle (202) betriebsfähig ist, um Licht in Richtung eines Zielbereichs außerhalb des Körpers (317) zu emittieren;
einen Detektor (204),
wobei der Detektor (204) innerhalb des Körpers (317) positioniert ist und
der Detektor (204) betriebsfähig ist, um Licht zu detektieren, das Licht von der Lichtquelle (202) beinhaltet, das von dem Zielbereich reflektiert wird;
eine Abdeckung (390),
wobei die Abdeckung (390) in der Öffnung (371') positioniert ist und
die Abdeckung (390) in einem Strahlengang im Wesentlichen zwischen Folgendem positioniert ist:
der Lichtquelle (202) und dem Zielbereich und
dem Zielbereich und dem Detektor (204); und
eine erste Lichtfokussierungsvorrichtung (2010; 2110), wobei die erste Lichtfokussierungsvorrichtung eine Zerstreuungslinse (390) im Wesentlichen in dem Strahlengang zwischen der Lichtquelle (202) und dem Zielbereich umfasst, **dadurch gekennzeichnet, dass** die Zerstreuungslinse (390) ein Mikroprismenarray ist, das Mikroprismen beinhaltet, die in Zeilen (952) und Spalten (954) derart angeordnet sind, dass die Mikroprismenspalten in jeder zweiten Zeile versetzt sind.

2. Vorrichtung nach Anspruch 1, wobei die Zerstreuungslinse auf der Innenoberfläche der Abdeckung (390) ausgebildet ist.

3. Vorrichtung nach Anspruch 1, die ferner eine zweite Lichtfokussierungsvorrichtung (394; 1330; 1340; 1350; 2210; 2310; 2412; 2512) in einem zweiten Strahlengang zwischen dem Zielbereich und dem ersten Detektor (204) umfasst, wobei die zweite Lichtfokussierungsvorrichtung (394; 1330; 1340; 1350; 2210; 2310; 2412; 2512) konfiguriert ist, um das Bildfeld des ersten Detektors (204) zu vergrößern.

4. Vorrichtung nach Anspruch 3, wobei die zweite Lichtfokussierungsvorrichtung eine Sammellinse (394) im Wesentlichen in dem Strahlengang zwischen dem Zielbereich und dem Detektor (204) ist.

5. Vorrichtung nach Anspruch 3, wobei die Sammellinse ein Mikroprismenarray (2210) ist, das auf der Innenoberfläche der Abdeckung (390) ausgebildet ist.

6. Vorrichtung nach Anspruch 4, wobei die Sammellinsenunteranordnung eine Mikrolinse umfasst.

7. Vorrichtung nach Anspruch 1, die ferner einen Detektor (204) umfasst, der betriebsfähig ist, um Licht zu detektieren, das Licht von der Lichtquelle (202) beinhaltet, das von einem Ziel in dem Zielbereich reflektiert wird.

8. Vorrichtung nach Anspruch 7, die ferner eine weitere Lichtfokussierungsvorrichtung in einem weiteren Strahlengang zwischen der Lichtquelle (202) und dem zweiten Detektor (204) umfasst, wobei der weitere Strahlengang den Weg des Lichts von der Lichtquelle (202) beinhaltet, das von dem zweiten Zielbereich reflektiert wird.

## Revendications

1. Dispositif de communication mobile (300), comprenant :
un corps (317) définissant une ouverture (371') ;
une source de lumière (202) :
la source de lumière (202) étant positionnée à l'intérieur du corps (317), et
la source de lumière (202) fonctionnant pour émettre de la lumière vers une zone cible extérieure au corps (317) ;
un détecteur (204) :
le détecteur (204) étant positionné à l'intérieur du corps (317), et le détecteur (204) fonctionnant pour détecter de la lumière, y compris de la lumière provenant de la source de lumière (202) réfléchie par la zone cible ;
une protection (390) :
la protection (390) étant positionnée dans l'ouverture (371'), et
la protection (390) étant positionnée sensiblement dans un chemin optique :
entre la source de lumière (202) et la zone cible, et
entre la zone cible et le détecteur (204) ; et
un premier dispositif de focalisation de lumière (2010 ; 2110), dans lequel le premier dispositif de focalisation de lumière comprend une lentille divergente (390) sensiblement dans le chemin optique entre la source de lumière (202) et la zone cible, **caractérisé en ce que** la lentille divergente (390) est un réseau de microprismes comportant des microprismes disposés en rangées (952) et en colonnes (954) de telle sorte que les colonnes de microprismes sont décalées toutes les deux rangées.

2. Dispositif selon la revendication 1, dans lequel la lentille divergente est formée sur la surface intérieure de la protection (390).

3. Dispositif selon la revendication 1, comprenant en outre un second dispositif de focalisation de lumière (394 ; 1330 ; 1340 ; 1350 ; 2210 ; 2310 ; 2412 ; 2512) dans un second chemin optique entre la zone cible et le premier détecteur (204), le second dispositif de focalisation de lumière (394 ; 1330 ; 1340 ; 1350 ; 2210 ; 2310 ; 2412 ; 2512) étant configuré pour augmenter le champ de vision du premier détecteur (204).

4. Dispositif selon la revendication 3, dans lequel le second dispositif de focalisation de lumière est une lentille convergente (394) sensiblement dans le chemin optique entre la zone cible et le détecteur (204).

5. Dispositif selon la revendication 3, dans lequel la lentille convergente est un réseau de microprismes (2210) formé sur la surface intérieure de la protection (390).

6. Dispositif selon la revendication 4, dans lequel le sous-ensemble de lentilles convergentes comprend une microlentille.

7. Dispositif selon la revendication 1, comprenant en outre un second détecteur (204) fonctionnant pour détecter de la lumière, y compris de la lumière provenant de la source de lumière (202) réfléchie par une cible dans une seconde zone cible.

8. Dispositif selon la revendication 7, comprenant en outre un autre dispositif de focalisation de lumière dans un autre chemin optique entre la source de lumière (202) et le second détecteur (204), l'autre chemin optique comportant le chemin de lumière provenant de la source de lumière (202) réfléchie par la seconde zone cible.
